# EUROPEAN PATENT APPLICATION

(11) **EP 0 553 363 A1**
(43) Date of publication of application: **04.08.1993**
(21) Application number: 92918523.9
(22) Date of filing: 28.08.1992
(51) Int. Cl.: F16H 1/08, B25J 17/02

(54) **HERMETICALLY CLOSED POWER TRANSMISSION APPARATUS**

(30) Priority: 29.08.1991 JP 218797/91
(71) Applicant: FANUC LTD., Minamitsuru-gun, Yamanashi 401-05 (JP)
(72) Inventor: NIHEI, Ryo, Fanuc Mansion Harimomi 7-210, Minamitsuru-gun, Yamanashi 4401 05 (JP); NAITO, Yasuo, Fanuc Mansion Harimomi 7-205, Minamitsuru-gun, Yamanashi 401-05 (JP); OTSUKA, Kazuhisa, Fanuc Mansion Harimomi 8-104, Minamitsuru-gun, Yamanashi 401-05 (JP); EBIHARA, Yasuhiro, Fanuc Dai-3 Vira-karamatsu, Minamitsuru-gun, Yamanashi 401-05 (JP)
(74) Representative: Otte, Peter, Dipl.-Ing.
(86) International application number: JP9201099
(87) International publication number: WO9305316

(57) **Abstract**

A hermetically closed power transmission apparatus wherein a minimum number of gear pairs (56 and 57, 60 and 61, 65 and 66) are disposed inside gear casings (51, 52) coupled separably with each other, seal means (59) is disposed in a region where an intermediate shaft (58) penetrates through both gear casings (51, 52), and a plurality of rotating driving outputs are obtained at an output end (64) inside a space by a plurality of rotation driving forces inputted from a plurality of coaxial input shafts (53, 54, 55).

## Description

### TECHNICAL FIELD

The present invention relates to an encapsulation-type power-transmission device capable of being incorporated into the wrist joint of an industrial robot or into a workpiece gripping mechanism of a work-transporting device for a transfer machine. More particularly, it relates to a compact, encapsulation-type power-transmission device having a gear casing of an encapsulated construction capable of sealing therein a lubricant such as grease, and containing a least possible number of sets of gears, and capable of receiving a plurality of input rotative drive forces and of transmitting a plurality of output rotative drive forces to driven units such as end effectors mounted on a robot wrist.

### BACKGROUND ART

A well-known power-transmission device is provided with a plurality of sets of gears by which respective directions and speeds of a plurality of input rotative drive forces are changed so as to obtain output rotative driving forces of desired rotating directions and rotating speeds at an output end of the device. Some of the well-known power-transmission devices are built in an encapsulated construction to prevent entry of water and dust into the power-transmission devices.

These prior art power-transmission devices will be described with reference to the accompanying drawings.

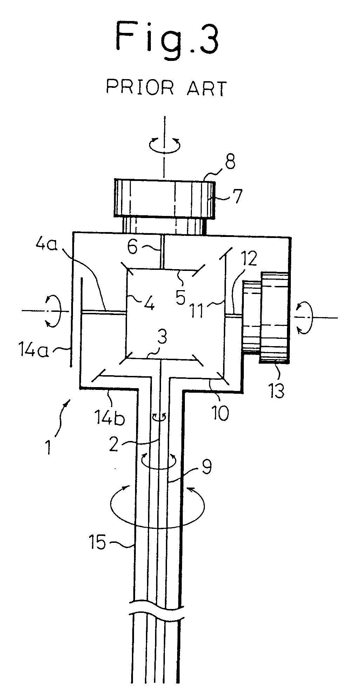

Shown in Fig. 3 is a power-transmission device designed particularly for application to a robot wrist joint. The power-transmission device uses sets of gears to convert three input rotative driving forces transmitted by three coaxial input shafts into three output rotative forces different from one another in a space, and taken out at the output end of the device.

Referring to Fig. 3, the power-transmission device 1 transmits an input rotative driving force applied to a first input shaft 2 having an input axis to a gear 4 engaging a gear 3 attached to the first input shaft 2 to rotate the gear 4 in a direction different from that of rotation of the first input shaft 2, and the rotation of the gear 4 is transmitted, through a gear 5 engaging the gear 4, to an output shaft 6 having an output axis aligned with the input axis, and further to an output wrist end 8 through a reduction gear 7 coaxial with the output shaft 6. The gear 4 is mounted on an intermediate shaft 4a having an axis extending perpendicularly to the input axis and the output axis, so that the three axes intersect each other at a single intersection point.

In the power-transmission device 1, a second input shaft 9 coaxial with the first input shaft 2 is driven for rotation by another rotative driving force, the rotation of the second input shaft 9 is transmitted through a gear 10 attached to the second input shaft 9 to a gear 11 to rotate the gear 11 in a direction different from the direction of rotation of the second input shaft 9, and then the rotation of the gear 11 is transmitted through an intermediate shaft 12 coaxial with the intermediate shaft 4a to a coaxial type reduction gear 13. The output rotative force of the coaxial type reduction gear 13, i.e., a second output rotative driving force, turns a first gear casing 14a forming part of the frame of the power-transmission device 1 together with the output wrist end 8 about the axis of the intermediate shafts 4a and 12.

The power-transmission device 1 is further provided with a third input shaft 15 coaxial with the first input shaft 2 and the second input shaft 9. Since the third input shaft 15 is joined to a second gear casing 14b forming the frame in combination with the first gear casing 14a, the third input shaft 15 drives the first gear casing 14a for rotation about an output axis in alignment with the axis of the third input shaft 15 through the second casing 14b when the third input shaft 15 is rotated by a third rotative driving force.

When the power-transmission device is incorporated in the wrist joint of a robot wrist a lubricant, such as grease or lubricating oil, cannot be perfectly sealed in the frame to lubricate the gears, and it is difficult to prevent entry of moisture and dust into the frame. This is because the first gear casing 14a and the second gear casing 14b are separate members and unable to form the frame in a perfectly encapsulated construction.

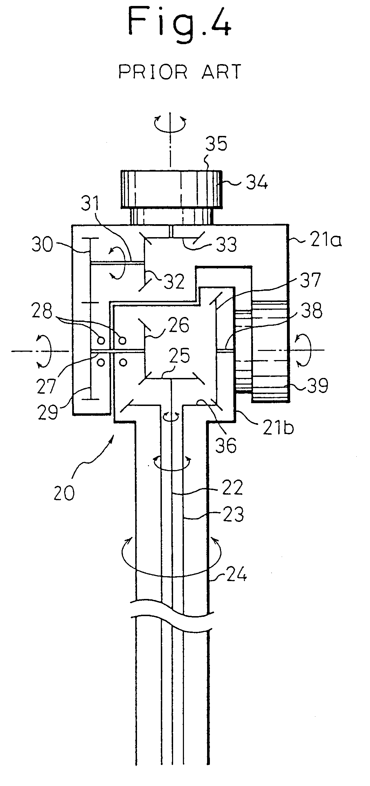

Figure 4 illustrates another prior art power-transmission device for the joint of a robot wrist.

This power-transmission device 20 has a frame consisting of discrete, encapsulated gear casings 21a and 21b. The gear casing 21b, similarly to the second gear casing 14b of the foregoing prior art power transmission device 1, is combined with three coaxial input shafts, i.e., a first input shaft 22, a second input shaft 23 and a third input shaft 24. When rotated by an input rotative driving force, the first input shaft 22 drives a gear 26 engaging a gear 25 joined to the first input shaft 22 for rotation about an axis perpendicularly intersecting the axis of the first input shaft. An intermediate shaft 27 is supported on the gear casing 21b in alignment with the axis of rotation of the gear 26 so as to extend through a wall of the gear casing 21b into the gear casing 21a, and gaps between the intermediate shaft 27 and the wall of the gear casing 21b are sealed with sealing members 28. A spur gear 29 is joined to the outer end of the intermediate shaft 27 within the gear casing 21a. Thus, the first input shaft 22 rotates the spur gear 29 through the gears 25 and 26 and the intermediate shaft 27 and, consequently, an output bevel gear 33 is driven for rotation through a spur gear 30 engaging the spur gear 29, another intermediate shaft 31, a bevel gear 32 joined to the intermediate shaft 31 and engaging the output bevel gear 33. The rotation of the output shaft of a coaxial type reduction gear 34, the speed of which is lower than that of the input shaft of the reduction gear 34, is transmitted to a wrist output end 35 coaxial with the axis of the first input shaft 22.

When the second input shaft 23 is driven for rotation by an input rotative driving force, the rotation of the second input shaft 23 is transmitted through a bevel gear 36 joined to the second input shaft 23, a bevel gear 37 engaging the bevel gear 36 and an intermediate shaft 38 coaxial with the intermediate shaft 27 to a coaxial type reduction gear 39 interposed between the gear casings 21a and 21b to drive the gear casing 21a for turning about the axis of the intermediate shaft 38 together with the wrist output end 35.

When driven for rotation by a third input rotative driving force, the third input shaft 24 rotates the gear casing 21b together with the gear casing 21a and, consequently, the wrist output end 35 is rotated about an axis in alignment with the axis of the third input shaft 24.

Although it is advantageous that each of the two gear casings 21a and 21b of the power-transmission device 20 of Fig. 4 has an encapsulation construction and hence, a lubricant can be sealedly filled in the gear casings 21a and 21b, structural requirements of the two gear casings 21a and 21b each having an encapsulated construction inevitably need an increased number of sets of gears contained in the gear casings 21a and 21b, and the accumulation of power losses at the increased number of sets of gears brings about a reduction in the transmission efficiency to an extent that cannot be ignored.

Further, the power transmission device needs an increased number of parts, which reduces the functional reliability and increase the cost. Still further, the power-transmission device is bulky, as it is difficult to form the wrist joint in a compact construction.

Thus, the former prior art power-transmission device has disadvantages such that the gear casings cannot be formed in an encapsulated construction for sealingly containing a lubricant therein and for preventing the entry of water and dust into the gear casings. Thus, the gears cannot be sufficiently lubricated.

The latter prior art power-transmission device having the encapsulated gear casings needs an increased number of sets of gears, which unavoidably reduces the transmission efficiency and functional reliability of the power-transmission device and increases the cost of the same.

### DISCLOSURE OF THE INVENTION

Accordingly, a primary object of the present invention is to provide a power-transmission device having an encapsulated construction capable of solving problems residing in the prior art power-transmission devices.

Another object of the present invention is to provide a power-transmission device having an encapsulated construction effective for application to a joint, in particular, the wrist joint of an industrial robot.

In view of the above-mentioned objects of the invention, in accordance with the technical concept of the present invention, power-transmitting gear trains including only a plurality of pairs of gears whose axes intersect perpendicularly to one another are built in an improved arrangement in a frame formed by connecting two encapsulated gear casings to simultaneously improve transmission efficiency, forming the power-transmission device in a compact construction, extending the life of the gears by sealingly filling a lubricant in the gear casing, and preventing the entry of foreign matter into the gear casing.

In accordance with the present invention, there is provided an encapsulation-type power-transmission device having a frame including a first gear casing and a second gear casing connected to the first casing, and capable of receiving a plurality of input rotative driving forces at an input end, and of transmitting the input rotative driving forces to a driven unit joined to an output end to drive the driven unit for a plurality modes of rotation and turning, and characterized in that:
the input end is provided on the first gear casing, and the output end is provided on the second gear casing;
one of the plurality of input rotative driving forces applied to an input shaft having an axis aligned with an input axis is converted by a pair of gears disposed within the first gear casing into a rotative driving force for driving an intermediate shaft having an intermediate axis perpendicularly intersecting the input axis;
the intermediate shaft is extended through the respective walls of the first and second gear casings into the second gear casing to transmit the rotative driving force through a pair of gears disposed within the second casing to an output shaft having an axis aligned with the input axis and perpendicularly intersecting the intermediate axis;
the rotative driving force of the output shaft is transmitted directly or through a reduction gear to the output end; and
gaps between the intermediate shaft and the respective walls of the first and second gear casings are sealed with sealing means.

The encapsulation-type power-transmission device of the present invention may be applied to the work gripping mechanism of a work transportation device for a transfer machine, as well as to the wrist joint of a robot, to convert plurality of coaxial input rotative driving force into a plurality of output rotative driving forces to drive the driven unit for different modes of rotation and turning in a space.

### BRIEF DESCRIPTION OF THE DRAWINGS

The above and other objects, features and advantages of the present invention will become more apparent from the ensuing description taken in conjunction with the accompanying drawings, in which:
Fig. 1 is a schematic sectional view of an encapsulated-type power-transmission device according to an embodiment of the present invention;
Fig. 2 is a schematic sectional view of a modification of the encapsulated-type power-transmission device of Fig. 1;
Fig. 3 is a schematic sectional view of an open-type power-transmission device according to a prior art; and
Fig. 4 is a schematic sectional view of an encapsulated-type power-transmission device according to a prior art.

### BEST MODE OF CARRYING OUT THE INVENTION

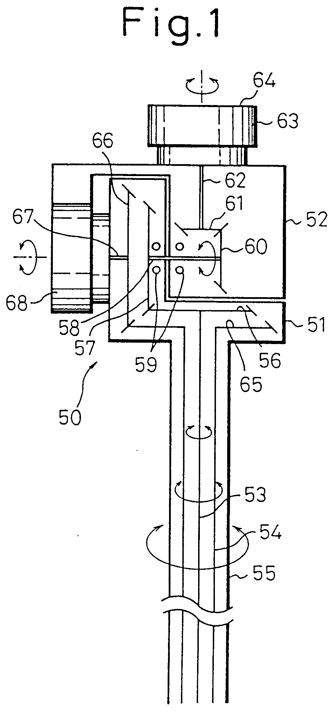

Referring to Fig. 1, an encapsulation-type power-transmission device 50 in accordance with the present invention has two gear casings 51 and 52 each having an encapsulated construction, which will be described later.

Three coaxial input shafts having a common input axis i.e., an inner first input shaft 53, a middle second input shaft 54 and an outer third input shaft 55, are connected to the gear casing 51 to form an input unit.

A bevel gear 56 is fixedly mounted on the first input shaft 53 within the gear casing 51 to transmit an input rotative driving force to a bevel gear 57 engaging the bevel gear 56 and having an axis perpendicularly intersecting the axis of the bevel gear 56. The bevel gear 57 is connected to an intermediate shaft 58 to rotate the intermediate shaft 58. The axis of the intermediate shaft 58 and the input axis of the first input shaft 53 intersect perpendicularly. The intermediate shaft 58 extends through the respective walls of the gear casings 51 and 52 into the second gear casing 52, and a bevel gear 60 is attached to the extremity of the intermediate shaft 58 in the gear casing 52. Gaps between the intermediate shaft 58 and the respective walls of the gear casings 51 and 52 are sealed by the well-known sealing means, including O-rings and oil-seals, to isolate the interior of the gear casing 51 and 52 from the exterior. A lubricant can be supplied into the gear casings 51 and 52 via portions of the gear casings 51 and 52 around the sealing means 59.

The input rotative driving force transmitted to the bevel gear 60 connected to the extremity of the intermediate shaft 58 is transmitted through a bevel gear 61, i.e., an output gear, engaging the bevel gear 60 and having an axis perpendicularly intersecting the axis of the bevel gear 60 to an output shaft 62 connected to the output bevel gear 61. Then, the output shaft 62 drives an output end 64 by an output rotative driving force through a coaxial type reduction gear 63 (a sealed reduction gear available on the market, such as a Harmonic drive gear or an RV reduction gear).

Another input rotative driving force applied to the middle second input shaft 54 to rotate the second input shaft 54 about the input axis is transmitted through another pair of gears, i.e., bevel gears 65 and 66 to another intermediate shaft 67 connected to the bevel gear 66. The intermediate shaft 67 having an axis perpendicularly intersecting the input axis of the middle second input shaft 54 transmits the input rotative driving force to an encapsulated coaxial reduction gear 68 disposed between the gear casings 51 and 52. Then, the reduction gear 68 drives the gear casing 52 for turning about the axis of the intermediate shaft 67. Thus, the output end 64 provided on the gear casing 52 is turned about the axes of the intermediate shaft 67 and the reduction gear 68.

Since the reduction gear 68 is provided internally with sealing means, not shown, the encapsulated construction of the gear casing 52 is effective.

The third input rotative driving force applied to the outer third input shaft 55 rotates the gear casing 51 directly about the axis of the third input shaft 55 and, consequently the output end 64 provided on the gear casing 51 is rotated about an axis aligned with the axis of the third input shaft 55.

The encapsulation-type power-transmission device 50 thus constructed is capable of converting the three input rotative driving forces into the three output rotative driving forces and of transmitting the three output rotative driving forces in a three-dimensional space to a driven unit joined to the output end 64 such as an end effector, not shown, joined to the output end of the wrist of a robot when the encapsulation-type power-transmission device 50 is incorporated into the joint of the wrist. Such rotative driving force converting and transmitting capabilities are realized by three pairs of gears, whereas the equivalent prior art power-transmission device needs more than three pairs of gears for the same capabilities. Since the gear casings 51 and 52 have each an encapsulated construction, the pairs of gears can be always lubricated by a suitable lubricant, such as grease or lubricating oil, so that the gears are able to rotate smoothly and the reduction of the power-transmission efficiency can be suppressed to the greatest extent.

Naturally, the encapsulated gear casings 51 and 52 prevent entry of moisture and dust into the same.

As stated above, since the arrangement of the pairs of gears within the gear casings 51 and 52 is simplified, the power-transmission device 50 has a compact construction, and the curtailment of the component parts and the improved arrangement of the gear trains simplifies assembling work and reduces the cost of the power-transmission device 50.

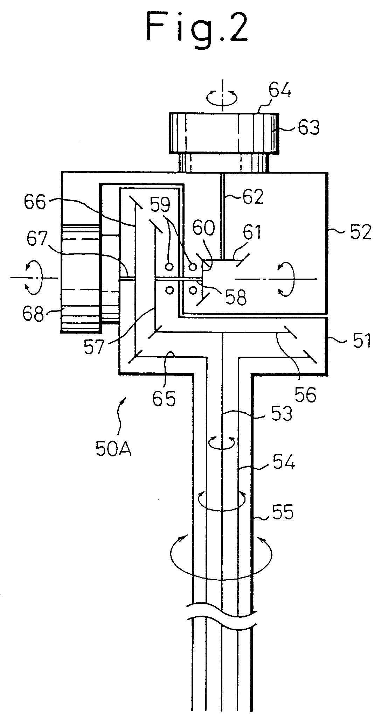

Figure 2 illustrates an encapsulated power-transmission device 50A in a modification of the foregoing power-transmission device 50.

This encapsulation-type power-transmission device 50A is different from the encapsulation-type power-transmission device 50 only in that a bevel gear 60 connected to the extremity of an intermediate shaft 58 engages a bevel gear 61 at a position diametrically opposite the position where the corresponding bevel gears 60 and 61 of the encapsulation-type power-transmission device 50 engage one another.

Accordingly, the operation and advantages of the encapsulation-type power-transmission device 50A is wholly the same as those of the foregoing encapsulation-type power-transmission device 50.

In a typical application, these encapsulation-type power-transmission devices 50 and 50A embodying the present invention are incorporated into the wrist joint of an industrial robot to transmit input rotative driving forces from the robot arm to an end effector, such as the robot hand or a tool, joined to the output end of the robot wrist to drive the end effector for rotary operation in a plurality of degrees of freedom of motion in a three-dimensional space.

However, it is to be understood that the use of the encapsulation-type power-transmission devices 50 and 50A is not limited to an application to the joint of the robot wrist; the same may be used for transmitting rotative driving forces to the functional unit of a machine such as the work gripping unit of a work transportation device for a transfer machine.

As is apparent from the foregoing description of the embodiments, the improved arrangement of the gear trains within the frame consisting of the gear casings each having an encapsulated construction according to the present invention brings about the following advantages;
First, a lubricant can be sealed in the encapsulated gear casings to lubricate the gears satisfactorily and power-transmission losses are reduced because the number of pairs of gears is comparatively small, so that the power transmission can be improved.
Secondly, the number of pairs of gears necessary for transmitting power is reduced and the gear casings are provided with only essential parts, so that the operating reliability is improved.
Thirdly, the curtailment of the component parts reduces the cost of the encapsulation-type power-transmission device.
Fourthly, since the number of points of engagement of the gears is comparatively small, the play of the end effector corresponding to the cumulative backlash can be reduced to the least extent, which improves the power-transmission efficiency.
Fifthly, the distance between the input shaft and the output end can be shortened, so that the moment to be carried by the power-transmission device of the present invention is smaller than that to be carried by the prior art power-transmission device for the same load.
Sixthly, since the gaps between the intermediate shaft extending between the two gear casings and the walls of the two gear casings are sealed with sealing means, a lubricant can be sealed in the gear casings to properly lubricate the pairs of gears disposed within the two gear casings, so that the abrasion of the gears is suppressed and, accordingly, the durability of the power-transmission device can be enhanced.

The bevel gears connected to the extremities of the input shafts 53 and 54 may be replaced with cylindrical spur gears, respectively, and the bevel gears engaging the bevel gears connected to the input shafts 53 and 54 may be replaced with circular racks provided with teeth arranged along pitch circles of predetermined radii, respectively.

### LIST OF REFERENCE CHARACTERS AND ELEMENTS

- 1: Power transmission device
- 2: First input shaft
- 3: Gear
- 4: Gear
- 4a: Intermediate shaft
- 5: Gear
- 6: Output shaft
- 7: Reduction gear
- 8: Output wrist end
- 9: Input shaft
- 10: Gear
- 11: Gear
- 12: Intermediate shaft
- 13: Coaxial reduction gear
- 14a: Gear casing
- 14b: Gear casing
- 15: Input shaft
- 20: Power transmission device
- 21a: Gear casing
- 21b: Gear casing
- 22: First input shaft
- 23: Second input shaft
- 24: Third input shaft
- 25: Gear
- 26: Gear
- 27: Intermediate shaft
- 28: Sealing means
- 29: Spur gear
- 30: Spur gear
- 31: Intermediate shaft
- 32: Bevel gear
- 33: Output bevel gear
- 34: Reduction gear
- 35: Wrist output end
- 36: Bevel gear
- 37: Bevel gear
- 38: Intermediate shaft
- 39: Reduction gear
- 50: Encapsulated-type power-transmission device
- 50A: Encapsulated-type power-transmission device
- 51: Gear casing
- 52: Gear casing
- 53: Inner first input shaft
- 54: Middle second input shaft
- 55: Outer third input shaft
- 56: Bevel gear
- 57: Bevel gear
- 58: Intermediate shaft
- 59: Sealing means
- 60: Bevel gear
- 61: Bevel gear
- 62: Output shaft
- 63: Coaxial reduction gear
- 64: Output end
- 65: Bevel gear
- 66: Bevel gear
- 67: Intermediate shaft
- 68: Coaxial reduction gear

## Claims

1. An encapsulation-type power-transmission device provided with a casing means formed by connecting a first encapsulated gear casing and a second encapsulated gear casing by means of sealing means, the device converting a plurality of rotative driving forces applied to an input end formed at one end of the casing means into a plurality of output rotative driving forces in a three-dimensional space, and transmitting the plurality of output rotative driving forces to a driven unit joined to an output end formed at the other end of the casing means, wherein the power-transmission device is characterized in that:
said input end is provided for said first encapsulated gear casing, and said output end is provided for said second encapsulated gear casing;
that a first pair of gears are disposed within said first gear casing for transmitting a first input rotative driving force among a plurality of input rotative driving forces, applied through said input end to a first input shaft having a first input axis to a first intermediate shaft having a first intermediate axis perpendicularly intersecting the first input axis and extending between said first and second encapsulated gear casings to rotate said intermediate shaft;
that a second pair of gears connected to one end of said intermediate shaft within said second encapsulated gear casing and one end of an output shaft having an axis perpendicularly intersecting said intermediate axis of said intermediate shaft within said second encapsulated gear casing to transmit the rotative driving force of said intermediate shaft to said output shaft for enabling said output shaft to produce an output rotative driving force;
and that sealing means are arranged for sealing gaps between said intermediate shaft and respective walls of said first and second encapsulated gear casings;
whereby the output rotative driving force of said output shaft is taken out directly or through a reduction gear as one output rotative driving force at said output end.

2. An encapsulation-type power-transmission device according to claim 1 further characterized in that the device comprises:
a third pair of gears disposed within said encapsulated first gear casing for transmitting a second rotative driving force among said plurality of input rotative driving force, applied through said input end to a second input shaft having a second input axis aligned with said first input axis of said first input shaft to a second intermediate shaft having a second intermediate axis aligned with said intermediate axis of said intermediate shaft to drive said second intermediate shaft for rotation; and
a rotative driving means driven by the rotative driving force of another intermediate shaft to turn the output end formed in said second gear casing together with said second gear casing about said another intermediate axis;
whereby the output rotative driving force of said another intermediate shaft is transmitted to said output end.

3. An encapsulation-type power-transmission device according to claim 1 further characterized in that the device comprises:
a third input shaft having a third input axis aligned with said first and second input axes and directly connected to said first and second input axes and directly connected to said first gear casing to transmit a third input rotative driving force among the plurality of input rotative driving forces to said first gear casing; and
a rotative driving means to rotate said first and second gear casings altogether by said third input rotative driving force;
whereby an output rotative driving force is transmitted to rotate said output end formed on said second gear casing about said third input axis.

4. An encapsulation-type power-transmission device according to claim 1, wherein said casing means formed by connecting said first and second gear casings is a wrist joint of an industrial robot, and said output end provided on said second gear casing is a holding means for holding an end effector.
